# EUROPÄISCHE PATENTSCHRIFT

(11) **EP 3 495 705 B1**
(45) Veröffentlichungstag und Bekanntmachung des Hinweises auf die Patenterteilung: **10.06.2020**
(21) Anmeldenummer: 17205926.3
(22) Anmeldetag: 07.12.2017
(51) Int. Cl.: F16L 37/56, B25J 15/04, H01R 13/00, B22D 41/00

(54) **ROBOTERTAUGLICHE MEDIENKUPPLUNG**
ROBOT-COMPATIBLE MEDIUM COUPLING
ACCOUPLEMENT FLUIDIQUE APPROPRIÉ POUR ROBOTS

(43) Veröffentlichungstag der Anmeldung: 12.06.2019
(73) Patentinhaber: Primetals Technologies Austria GmbH, 4031 Linz (AT)
(72) Erfinder: Scheidegger, Roger, 4300 St. Valentin (AT)
(74) Vertreter: Metals@Linz

(56) Entgegenhaltungen:
- EP-A1- 2 457 799
- EP-A1- 2 564 994
- WO-A1-2016/135131
- WO-A2-2009/097956
- DE-U1- 20 018 124
- DE-U1-202012 009 505

## Beschreibung

### Gebiet der Technik

Die vorliegende Erfindung geht aus von einer Medienkupplung,
- wobei die Medienkupplung ein Festteil und ein Loseteil aufweist,
- wobei das Loseteil durch Bewegen in einer Fügerichtung auf das Festteil zu von einer Trennstellung in eine Verbindungsstellung gebracht werden kann und durch Bewegen entgegen der Fügerichtung vom Festteil weg von der Verbindungsstellung in die Trennstellung gebracht werden kann,
- wobei das Loseteil in der Trennstellung vom Festteil getrennt ist und in der Verbindungsstellung mit dem Festteil verbunden ist,
- wobei das Festteil und das Loseteil an ihren in der Verbindungsstellung einander zugewandten Seiten miteinander zusammenwirkende Hauptpositionierhilfen aufweisen, durch welche das Loseteil beim Überführen von der Trennstellung in die Verbindungsstellung quer zur Fügerichtung gesehen relativ zum Festteil positioniert wird,
- wobei das Festteil und das Loseteil jeweils eine Anzahl an Auflageflächen aufweisen,
- wobei die Auflageflächen an dem Festteil und dem Loseteil zumindest in der Fügerichtung und vorzugsweise auch quer dazu unbeweglich angeordnet sind,
- wobei in mindestens einer Auflagefläche des Festteils und der korrespondierenden Auflagefläche des Loseteils jeweils ein Kanal zum Führen eines gasförmigen Mediums mündet.

### Stand der Technik

Eine derartige Medienkupplung ist beispielsweise aus der WO 2009/097 956 A2 bekannt. Bei dieser Medienkupplung sind die Hauptpositionierhilfen derart aufeinander abgestimmt, dass das Loseteil selbsthemmend mit dem Festteil verbunden ist. Auch wenn nach dem Überführen des Loseteils in die Verbindungsstellung auf einen Haltemechanismus, der das Loseteil in der Verbindungsstellung halten soll, keine Kraft mehr ausgeübt wird und demzufolge der Haltemechanismus ebenfalls keine Kraft mehr ausübt, bleibt das Loseteil mit dem Festteil verbunden. Ein Entfernen des Loseteils ist nur mit erheblichem Kraftaufwand möglich. Konkret sind bei der WO 2009/097 956 A2 die Hauptpositionierhilfen als Kegelschaft und Kegelhülse mit einem relativ geringen Öffnungswinkel ausgebildet, so dass nach dem Verbinden des Loseteils mit dem Festteil durch eine Spanneinrichtung der Kegelschaft und die Kegelhülse miteinander eigenständig geklemmt bleiben.

Aus der EP 1 894 649 A1 ist ein Roboter bekannt, der mit einem automatischen Greiferwechselsystem ausgerüstet ist und an einem metallurgischen Behälter mit einem Schiebeverschluss den Schiebeverschluss betätigt. Bei der EP 1 894 649 A1 wird zunächst mittels mindestens einer Kamera die Position des Schiebeverschlusses erfasst. Danach wird mittels des Greiferwechselsystems eine Kolben-Zylinder-Einheit ergriffen und mit dieser der Schiebeverschluss betätigt. Weitergehende Einzelheiten der mechanischen Ausgestaltung des Greiferwechselsystems sind der EP 1 894 649 A1 nicht zu entnehmen.

Bei metallurgischen Prozessen ist es in manchen Fällen erforderlich, metallurgischen Gefäßen gasförmige Medien und/oder elektrische Signale zuzuführen bzw. elektrische Signale von den metallurgischen Gefäßen abzugreifen. Zu diesem Zweck werden entsprechende Medienkupplungen eingesetzt, welche eine Verbindung für die zu führenden Gase und/oder elektrischen Signale schaffen. Das Festteil der Medienkupplung befindet sich in diesem Fall am metallurgischen Gefäß, das Loseteil wird nach Bedarf mit dem Festteil verbunden und von ihm gelöst.

Die metallurgischen Gefäße - beispielsweise Gießpfannen - sind nur mit einer begrenzten Genauigkeit positionierbar, wobei die Genauigkeit oftmals Toleranzen von über 100 mm unterworfen ist. Ein direktes, automatisches Verbinden des Loseteils mit dem Festteil und Lösen des Loseteils vom Festteil mittels eines Roboters ist daher problematisch. Durch entsprechende Sensoreinrichtungen - insbesondere dreidimensionale Vermessungssysteme - lässt sich die konkrete Position der Gießpfanne und damit der Medienkupplung relativ genau bestimmen. Die verbleibende Ungenauigkeit liegt in der Regel im Bereich unter 10 mm. Sie beträgt aber immer noch mehrere Millimeter und ist damit für übliche Schnellkupplungen, wie sie von Herstellern von Industrierobotern standardmäßig eingesetzt werden, zu ungenau. Denn insbesondere müssen die in den Loseteilen von üblichen Schnellkupplungen verbauten Gas- und Elektrostecker bauartbedingt exakt zentriert und exakt ausgerichtet auf die entsprechenden Buchsen und Aufnahmen des Festteils aufgesetzt werden. Erschwerend kommt hinzu, dass vor dem Verbinden des Loseteils mit dem Festteil das Festteil oftmals erheblich heißer als das Loseteil sein kann.

Es wurde bereits versucht, die immer noch bestehenden Toleranzen durch Federausgleichssysteme und genaue Zentrierstifte zu kompensieren. Diesen Versuchen war im Ergebnis jedoch kein Erfolg beschieden. Denn es wurde zwar möglich, das Loseteil relativ zum Festteil entsprechend zu positionieren. Kurz vor dem Erreichen der Verbindungsstellung ist es jedoch immer wieder zum Klemmen und Verkanten gekommen. Im Ergebnis hat sich dieser Ansatz daher nicht als praxistauglich erwiesen.

### Zusammenfassung der Erfindung

Die Aufgabe der vorliegenden Erfindung besteht darin, eine Medienkupplung der eingangs genannten Art derart weiter zu entwickeln, dass auf einfache und zuverlässige Weise eine vollautomatische Handhabung durch einen Industrieroboter möglich wird und dennoch zuverlässig die Verbindung der zu übertragenden Medien (Gase und elektrische Signale) hergestellt werden kann

Die Aufgabe wird durch eine Medienkupplung mit den Merkmalen des Anspruchs 1 gelöst. Vorteilhafte Ausgestaltungen der erfindungsgemäßen Medienkupplung sind Gegenstand der abhängigen Ansprüche 2 bis 13.

Erfindungsgemäß wird eine Medienkupplung der eingangs genannten Art dadurch ausgestaltet,
- dass die Anzahl an Auflageflächen des Festteils und des Loseteils jeweils genau drei beträgt,
- dass die Auflageflächen des Festteils und des Loseteils jeweils ein Dreieck bilden und
- dass entweder das Festteil und das Loseteil in der Verbindungsstellung ausschließlich mit ihren jeweils drei Auflageflächen aneinander anliegen oder das Festteil und das Loseteil in der Verbindungsstellung zwar zusätzlich zu ihren jeweils drei Auflageflächen auch mit einer Anzahl von weiteren Elementen aneinander anliegen, die weiteren Elemente aber am Festteil und/oder am Loseteil zumindest in der Fügerichtung nachgiebig angeordnet sind.

Durch die Festlegung der Anzahl an Auflageflächen des Festteils und des Loseteils auf jeweils genau drei in Verbindung mit der Anordnung der Auflageflächen in einem Dreieck wird gewährleistet, dass das Loseteil, wenn die entsprechenden Auflageflächen des Loseteils in der Verbindungsstellung an den entsprechenden Auflageflächen des Festteils anliegen, exakt positioniert ist. Dies gilt ganz besonders, wenn das Dreieck ein im Wesentlichen gleichseitiges Dreieck ist. Wenn das Festteil und das Loseteil in der Verbindungsstellung ausschließlich mit ihren jeweils drei Auflageflächen aneinander anliegen, ergibt sich die Positionierung ganz von selbst. Wenn das Festteil und das Loseteil in der Verbindungsstellung zwar zusätzlich zu ihren jeweils drei Auflageflächen auch mit einer Anzahl von weiteren Elementen aneinander anliegen, bewirkt die nachgiebige Anordnung der weiteren Elemente am Festteil und/oder am Loseteil, dass nicht die weiteren Elemente, sondern nach wie vor die jeweils drei Auflageflächen die Endposition des Loseteils in der Verbindungsstellung bestimmen.

Vorzugsweise sind die jeweiligen Hauptpositionierhilfen quer zur Fügerichtung gesehen innerhalb des durch die jeweils genau drei Auflageflächen von Festteil und Loseteil gebildeten Dreiecks angeordnet. Dadurch kann die Größe der durch die jeweils genau drei Auflageflächen von Festteil und Loseteil gebildeten Dreiecke maximiert werden, was seinerseits wiederum die Stabilität und Positioniergenauigkeit erhöht.

Vorzugsweise sind die Hauptpositionierhilfen derart ausgebildet, dass sie eine Bewegung des Loseteils in einer Ebene orthogonal zur Fügerichtung in umso größerem Ausmaß zulassen, je weiter das Loseteil in Fügerichtung gesehen vom Festteil entfernt ist. Dadurch ist zum Zuführen des Loseteils zum Festteil eine geringere anfängliche Positioniergenauigkeit erforderlich. Das Zuführen des Loseteils zum Festteil wird somit erleichtert.

In einer konkreten Ausgestaltung können das Festteil und das Loseteil beispielsweise jeweils genau eine Hauptpositionierhilfe aufweisen, wobei je eine der Hauptpositionierhilfen als Kegelschaft und als Kegelhülse ausgebildet ist. Dadurch ergibt sich die immer bessere Positionierung beim Überführen von der Trennstellung in die Verbindungsstellung auf besonders einfache Weise.

Der Kegelschaft und die Kegelhülse weisen jeweilige Öffnungswinkel auf. Der Öffnungswinkel der Kegelhülse und der Öffnungswinkel des Kegelschafts können den gleichen Wert oder voneinander verschiedene Werte aufweisen. In beiden Fällen kann ein selbsthemmendes Verhalten der Hauptpositionierhilfen vermieden werden, wobei aber dennoch die Positionierung als solche gewährleistet bleibt. Sobald - beispielsweise durch ein Halteelement - keine äußere Kraft mehr auf die Hauptpositionierhilfen ausgeübt wird, halten diese also das Loseteil nicht am Festteil. Dies gilt auch bei einem Verkanten des Loseteils relativ zum Festteil.

Vorzugsweise liegen die Öffnungswinkel der Kegelhülse und des Kegelschafts bei 9° bis 16°, insbesondere bei 10° bis 15°. Andere Werte sind jedoch nicht ausgeschlossen.

Unabhängig davon, auf welche Art und Weise die Hauptpositionierhilfen in konstruktiver Hinsicht ausgebildet sind, sind sie in funktionaler Hinsicht vorzugsweise derart ausgebildet, dass sie nicht selbsthemmend wirken. Dies kann im Falle der Ausgestaltung der Hauptpositionierhilfen als Kegelschaft und Kegelhülse, wie bereits erwähnt, insbesondere durch eine entsprechende Abstimmung der Öffnungswinkel erreicht werden. Bei anderen Ausgestaltungen der Hauptpositionierhilfen ist dies jedoch ebenfalls möglich.

In einer besonders bevorzugten Ausgestaltung sind die Hauptpositionierhilfen bezüglich einer in Fügerichtung verlaufenden Fügeachse rotationssymmetrisch ausgebildet. Beispielsweise bei der bereits erwähnten Ausgestaltung als Kegelhülse und Kegelschaft ist dies der Fall. Im Falle einer rotationssymmetrischen Ausgestaltung der Hauptpositionierhilfen weisen das Festteil und das Loseteil vorzugsweise weiterhin an ihren einander zugewandten Seiten miteinander zusammenwirkende Zusatzpositionierhilfen auf, durch welche das Loseteil beim Überführen von der Trennstellung in die Verbindungsstellung um die Fügeachse herum gesehen in einer vorbestimmten Drehstellung orientiert wird. Dadurch wird nicht nur eine translatorische Positionierung quer zur Fügerichtung gewährleistet, sondern durch die Zusatzpositionierhilfen auch eine definierte rotatorische Orientierung um die Fügeachse herum gesehen erreicht.

Vorzugsweise ist eine der Zusatzpositionierhilfen als Kugel oder als Zylinder ausgebildet, wobei im Falle eines Zylinders die Zylinderachse orthogonal zur Fügeachse verläuft, insbesondere radial zur Fügeachse. Die andere der Zusatzpositionierhilfen ist in diesem Fall als sich verjüngende Kontur ausgebildet, die an ihrem schmalen Ende eine Vertiefung zur Aufnahme der einen Zusatzpositionierhilfe aufweist. Durch diese Ausgestaltung wird eine stabile und zuverlässige Führung auch dann gewährleistet, wenn das Loseteil, bezogen auf die Fügerichtung, leicht verkantet auf das Festteil aufgesetzt wird.

Vorzugsweise sind die Hauptpositionierhilfen und die Zusatzpositionierhilfen derart aufeinander abgestimmt, dass beim Überführen des Loseteils von der Trennstellung in die Verbindungsstellung zuerst durch das Zusammenwirken der Hauptpositionierhilfen das Loseteil relativ zum Festteil teilweise oder vollständig quer zur Fügerichtung translatorisch positioniert wird und erst danach durch das Zusammenwirken der Zusatzpositionierhilfen das Loseteil in der vorbestimmten Drehstellung rotatorisch orientiert wird. Dadurch wird das Überführen von der Trennstellung in die Verbindungsstellung besonders zuverlässig erreicht.

Vorzugsweise sind die jeweils drei Auflageflächen poliert und/oder gehärtet und liegen die jeweils drei Auflageflächen weiterhin in der Verbindungsstellung ohne Dichtungselemente zwischen ihnen unmittelbar aneinander an. Dadurch wird zum einen die Positioniergenauigkeit verbessert. Zum anderen werden Dichtungselemente (beispielsweise Dichtungsringe), die aufgrund der rauen Einsatzbedingungen sehr störanfällig wären, vermieden. Durch das Weglassen der Dichtungselemente können zwar gewisse Leckströme der geführten gasförmigen Medien entstehen. Dies ist jedoch tolerierbar, da zum einen nur ungefährliche Gase (Luft, Stickstoff und Edelgase wie beispielsweise Argon) geführt werden und weiterhin die Drücke, unter denen diese Gase stehen, mit in der Regel maximal 15 bar relativ gering sind. Bei diesen Randbedingungen sind kleinere Undichtigkeiten tolerierbar.

Vorzugsweise sind die jeweils drei Auflageflächen in der Verbindungsstellung orthogonal zur Fügerichtung orientiert. Dadurch wird zum einen die Positioniergenauigkeit verbessert und zum anderen trotz des Fehlens von Dichtungselementen eine relativ gute Abdichtung erreicht.

In einer weiteren Ausgestaltung ist bevorzugt vorgesehen,
- dass am Festteil ein feststehendes Halteelement angeordnet ist und am Loseteil ein bewegliches Halteelement angeordnet ist,
- dass das bewegliche Halteelement mittels eines Aktors von einem geöffneten Zustand in einen geschlossenen Zustand und vom geschlossenen Zustand in den geöffneten Zustand überführbar ist,
- dass im geöffneten Zustand des beweglichen Halteelements ein Überführen des Loseteils von der Trennstellung in die Verbindungsstellung und umgekehrt möglich ist,
- dass im geschlossenen Zustand des beweglichen Halteelements ein Überführen des Loseteils von der Trennstellung in die Verbindungsstellung und umgekehrt nicht möglich ist und
- dass der Aktor derart ausgebildet ist, dass im kraftlosen Zustand des Aktors das bewegliche Halteelement durch äußere Krafteinwirkung auf das Loseteil vom geschlossenen in den geöffneten Zustand überführbar ist.

Dadurch wird erreicht, dass die Verbindung des Loseteils mit dem Festteil ohne weiteres lösbar ist, wenn der Aktor kraftlos wird. Das feststehende Halteelement kann beispielsweise als Zugkopf mit nutförmiger Hinterschneidung ausgebildet sein, das bewegliche Halteelement als Spannhülse mit Greiffingern. Der Aktor kann insbesondere als Druckzylinder ausgebildet sein, beispielsweise als pneumatisch betätigter Zylinder.

Vorzugsweise verläuft die Fügerichtung im Wesentlichen waagrecht. In diesem Fall sind weiterhin vorzugsweise beidseitig der Hauptpositionierhilfen sich in Fügerichtung erstreckende Rückhalteelemente angeordnet, die im kraftlosen Zustand des Aktors ein Abfallen des Loseteils vom Festteil verhindern. Die Rückhalteelemente können insbesondere als Haltedorne ausgebildet sein.

Falls das Festteil und das Loseteil in der Verbindungsstellung auch mit einer Anzahl von weiteren Elementen (in diesem Fall nachgiebig) aneinander anliegen, werden über die weiteren Elemente am Festteil und am Loseteil in der Verbindungsstellung vorzugsweise gasförmige Medien und/oder elektrische Signale zwischen dem Festteil und dem Loseteil übertragen. Denn wenn dies nicht der Fall wäre, könnten die weiteren Elemente ersatzlos entfallen. Im Falle der Übertragung eines gasförmigen Mediums sind die jeweils aneinander anliegenden Elemente des Festteils und des Loseteils vorzugsweise beide als Fläche ausgebildet. Im Falle der Übertragung eines elektrischen Signals ist von den beiden jeweils aneinander anliegenden Elementen des Festteils und des Loseteils vorzugsweise eines als Fläche ausgebildet. Das andere Element kann nach Bedarf ebenfalls als Fläche, als Feder, als federnd gelagerter Kontaktstift usw. ausgebildet sein. Die zu übertragenden elektrischen Signale können nach Bedarf Gleichspannung oder Wechselspannung führen. Die verwendeten Spannungen sind in der Regel relativ niedrig (meist maximal 60 V, vorzugsweise sogar maximal 40 V. Der Begriff "elektrisches Signal" im Sinne der vorliegenden Erfindung ist weit zu verstehen. Es kann sich auch um eine reine Energieversorgung handeln.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Medienkupplung in perspektivischer Darstellung,
- FIG 2: ein Festteil der Medienkupplung von FIG 1 in einer leicht perspektivischen Darstellung von vorne,
- FIG 3: ein Loseteil der Medienkupplung von FIG 1 in einem perspektivischen Teilschnitt,
- FIG 4: die Medienkupplung von FIG 1 in einer Schnittdarstellung,
- FIG 5: die Schnittdarstellung von FIG 4 in perspektivischer Darstellung,
- FIG 6: in einer vergröberten Darstellung einen Kegelschaft und eine Kegelhülse in einer Schnittdarstellung,
- FIG 7: in einer vergröberten Darstellung Auflageflächen und Elemente von der Seite und
- FIG 8: in einer vergröberten Darstellung Zusatzpositionierhilfen und deren Zusammenwirken.

### Beschreibung der Ausführungsformen

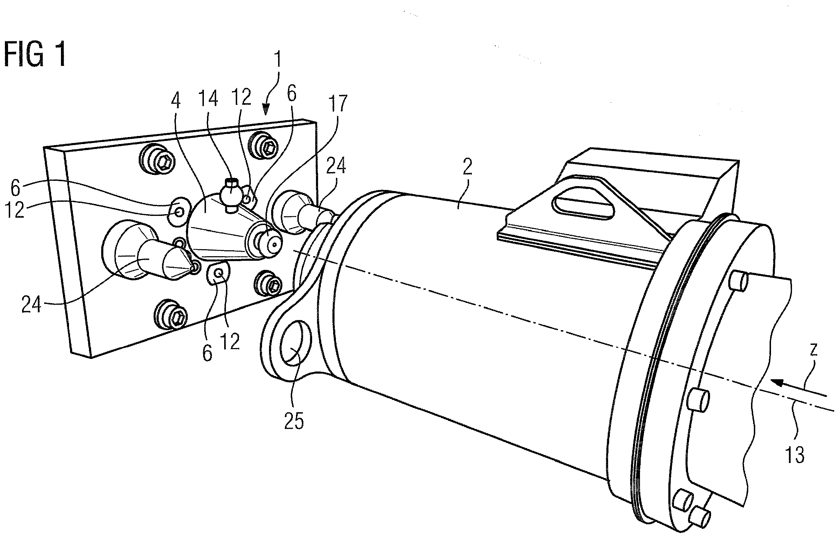

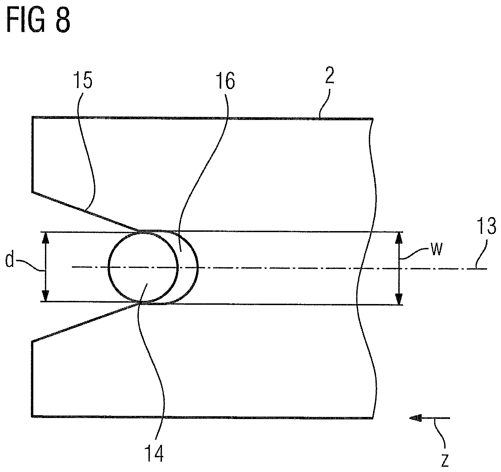

Die FIG 1 bis 8 zeigen dieselbe Medienkupplung. Die FIG werden daher nachstehend gemeinsam erläutert.

Gemäß FIG 1 weist eine Medienkupplung ein Festteil 1 und ein Loseteil 2 auf. Das Festteil 1 ist dasjenige Teil der Medienkupplung, das beim Verbinden von Festteil 1 und Loseteil 2 miteinander und beim Lösen von Festteil 1 und Loseteil 2 voneinander nicht bewegt wird. Das Loseteil 2 ist dasjenige Teil, das bewegt wird. Das Festteil 1 kann beispielsweise an einem metallurgischen Gefäß wie beispielsweise einer Gießpfanne befestigt sein. Das metallurgische Gefäß ist in den FIG nicht dargestellt.

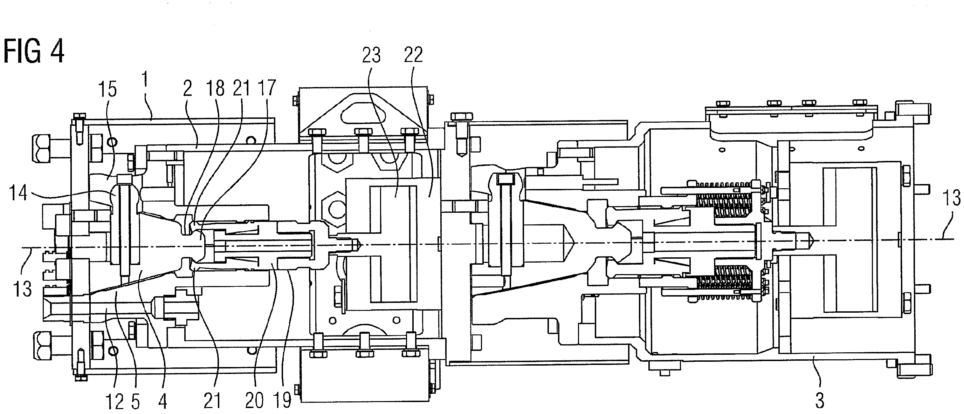

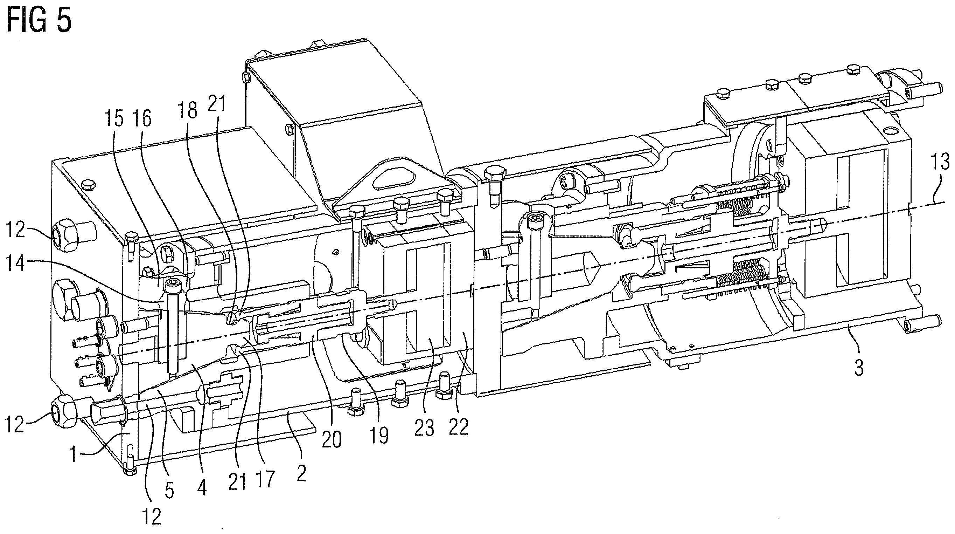

Das Loseteil 2 soll mittels eines Industrieroboters - sichtbar ist lediglich in den FIG 4 und 5 das Endstück 3 des Industrieroboters - zuverlässig mit dem Festteil 1 verbunden werden können und ebenso zuverlässig von dem Festteil 1 getrennt werden können. Das Loseteil 2 soll also, ausgehend von einer Trennstellung, in welcher das Loseteil 2 vom Festteil 1 getrennt ist, mittels des Industrieroboters in eine Verbindungsstellung gebracht werden können, in der das Loseteil 2 mit dem Festteil 1 verbunden ist. In verbundenen Zustand sollen über die dann gegebene Verbindung von Loseteil 2 und Festteil 1 miteinander Medien - insbesondere Gase und eventuell auch elektrische Signale - übertragen werden können.

Zum Verbinden des Loseteils 2 mit dem Festteil 1 wird zunächst mittels Kameras oder ähnlicher Einrichtungen die Position des Festteils 1 erfasst. Beispielsweise kann mittels mehrerer Kameras ein stereoskopisches Bild erfasst und ausgewertet werden, so dass nach der Auswertung die Position des Festteils 1 auf 10 mm genau oder noch genauer bekannt ist. Die Position ist auf den Industrieroboter bezogen. Das Erfassen und Bestimmen der Position ist Fachleuten bekannt und als solches nicht Gegenstand der vorliegenden Erfindung. Vor oder nach dem Bestimmen der Position greift der Industrieroboter mit seinem Endstück 3 das Loseteil 2 und verriegelt es am Endstück 3. Sodann überführt der Industrieroboter das Loseteil 2 in die Trennstellung. Beispielsweise befindet sich das Loseteil 2 in der Darstellung von FIG 1 in der Trennstellung.

In der Trennstellung ist das Loseteil 2 noch vollständig vom Festteil 1 getrennt. Es ist aber bereits - jedenfalls im Wesentlichen - sowohl korrekt ausgerichtet (orientiert) als auch quer zu einer Fügerichtung z im Wesentlichen positioniert. Diese Positionierung ist für den Industrieroboter möglich, weil ihm zuvor die Position des Festteils 1 bekannt geworden ist. Zum Überführen in die Verbindungsstellung (dargestellt in den FIG 4 und 5) wird sodann das Loseteil 2 vom Industrieroboter in der Fügerichtung z auf das Festteil 1 zu bewegt. Diese Bewegung kann beispielsweise positionsgeregelt oder kraftgeregelt erfolgen.

Nach dem Erreichen der Verbindungsstellung wird das Loseteil 2 am Festteil 1 verriegelt. Hierauf wird später noch näher eingegangen werden. Als nächstes entriegelt der Industrieroboter das Endstück 3 vom Loseteil 2. Dadurch ist der Verbindungsvorgang des Loseteils 2 mit dem Festteil 1 abgeschlossen.

Zum Lösen des Loseteils 2 vom Festteil 1 wird ähnlich vorgegangen. Zunächst wird mittels Kameras oder ähnlicher Einrichtungen die Position des Loseteils 2 erfasst. Dieser Vorgang ist Fachleuten bekannt und als solcher nicht Gegenstand der vorliegenden Erfindung. Danach greift der Industrieroboter mit seinem Endstück 3 das Loseteil 2 und verriegelt es am Endstück 3. Als nächstes wird das Loseteil 2 vom Festteil 1 entriegelt. Auch hierauf wird später noch näher eingegangen werden. Nach dem Entriegeln des Loseteils 2 vom Festteil 1 überführt der Industrieroboter das Loseteil 2 durch Bewegen entgegen der Fügerichtung z vom Festteil 1 weg in die Trennstellung. Sodann legt der Industrieroboter das Loseteil 2 an einer geeigneten Stelle ab und entriegelt das Endstück 3 vom Loseteil 2. Dadurch ist der Lösevorgang des Loseteils 2 vom Festteil 1 abgeschlossen.

Um beim Überführen des Loseteils 2 von der Trennstellung in die Verbindungsstellung ein exaktes Positionieren des Loseteils 2 relativ zum Festteil 1 zu erleichtern, weisen das Festteil 1 und das Loseteil 2 an ihren in der Verbindungsstellung einander zugewandten Seiten miteinander zusammenwirkende Hauptpositionierhilfen 4, 5 auf. Durch die Hauptpositionierhilfen 4, 5 wird das Loseteil 2 beim Überführen von der Trennstellung in die Verbindungsstellung quer zur Fügerichtung z gesehen relativ zum Festteil 1 positioniert.

Die Hauptpositionierhilfen 4, 5 können nach Bedarf ausgebildet sein. In funktionaler Hinsicht sind die Hauptpositionierhilfen 4, 5 jedoch vorzugsweise derart ausgebildet dass sie eine Bewegung des Loseteils 2 in einer orthogonal zur Fügerichtung z orientierten xy-Ebene in umso größerem Ausmaß zulassen, je weiter das Loseteil 2 in Fügerichtung z gesehen vom Festteil 1 entfernt ist. Innerhalb der xy-Ebene sind die Richtungen x und y linear unabhängig voneinander, in der Regel und vorzugsweise orthogonal zueinander. Die Funktionalität der Hauptpositionierhilfen 4, 5 kann durch ein entsprechendes Abschrägen von Führungsflächen der Hauptpositionierhilfen 4, 5 ohne weiteres erreicht werden. Beispielsweise können das Festteil 1 und das Loseteil 2 entsprechend der Darstellung in den FIG 1 bis 5 jeweils genau eine Hauptpositionierhilfe 4, 5 aufweisen, wobei je eine der Hauptpositionierhilfen 4, 5 als Kegelschaft 4 und als Kegelhülse 5 ausgebildet ist. Auch andere Ausgestaltungen, beispielsweise als Pyramiden, sind möglich.

Gemäß der Darstellung in den FIG 1 bis 5 ist der Kegelschaft 4 am Festteil 1 angeordnet, die Kegelhülse 5 am Loseteil 2. Diese Anordnung stellt den Standardfall dar. Prinzipiell wäre aber auch die umgekehrte Vorgehensweise möglich.

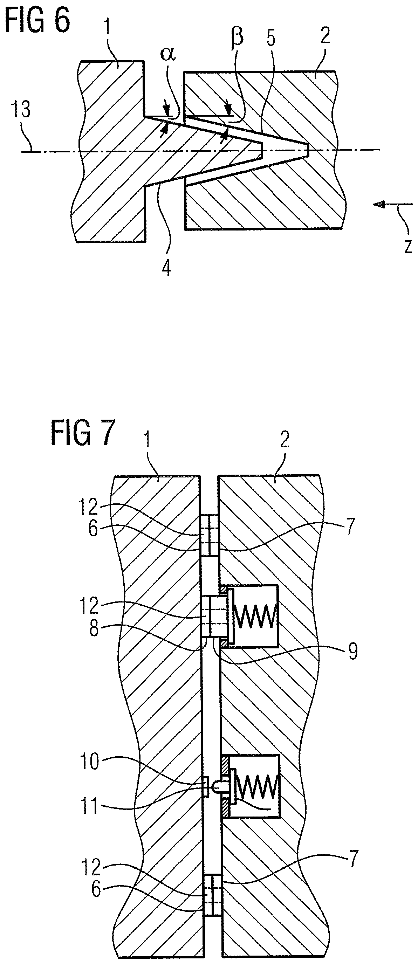

Der Kegelschaft 4 weist gemäß FIG 6 einen Öffnungswinkel α auf. Die Kegelhülse 5 weist einen Öffnungswinkel β auf. Insbesondere liegen die Öffnungswinkel α, β in der Regel zwischen 9° und 16°, beispielsweise zwischen 10° und 15°. Die Öffnungswinkel α, β weisen vorzugsweise den gleichen Wert auf. Sie können aber auch voneinander verschiedene Werte aufweisen.

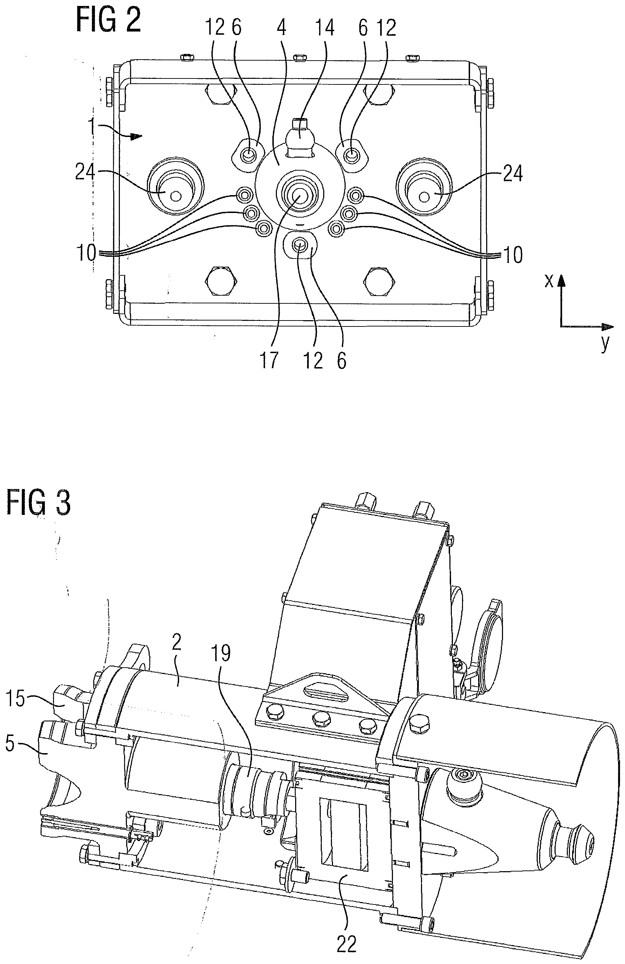

Das Festteil 1 weist - siehe besonders deutlich die FIG 1 und 2 - genau drei Auflageflächen 6 auf, also nicht mehr und nicht weniger als drei Auflageflächen 6. Die Auflageflächen 6 des Festteils 1 bilden ein Dreieck. Das Dreieck ist vorzugsweise im Wesentlichen ein gleichseitiges Dreieck. Die Winkel des gebildeten Dreiecks liegen also in etwa bei 60°. Kleinere Abweichungen sind jedoch problemlos. Keiner der Winkel des gebildeten Dreiecks sollte jedoch ein stumpfer Winkel sein, also mehr als 90° betragen. Vorzugsweise ist die Hauptpositionierhilfe 4 des Festteils 1 innerhalb des durch die drei Auflageflächen 6 des Festteils 1 gebildeten Dreiecks angeordnet. Die Auflageflächen 6 sind an dem Festteil 1 zumindest in der Fügerichtung z unbeweglich angeordnet. Vorzugsweise sind sie auch in der xy-Ebene unbeweglich angeordnet. Vorzugsweise sind die Auflageflächen 6 orthogonal zur Fügerichtung z orientiert, verlaufen also in der bzw. parallel zur xy-Ebene.

Das Loseteil 2 weist für jede der drei Auflageflächen 6 des Festteils 1 jeweils genau eine korrespondierende Auflagefläche 7 (siehe FIG 7) auf, insgesamt also ebenfalls genau drei Auflageflächen 7, nicht mehr und nicht weniger. Die Auflageflächen 7 des Loseteils 2 liegen in der Verbindungsstellung auf den Auflageflächen 6 des Festteils 1 auf. Demzufolge bilden auch die Auflageflächen 7 des Loseteils 2 ein Dreieck. Das von den Auflageflächen 7 des Loseteils 2 gebildete Dreieck ist - zumindest im wesentlichen - kongruent zu dem von den Auflageflächen 6 des Festteils 1 gebildeten Dreieck. Weiterhin ist die Hauptpositionierhilfe 5 des Loseteils 2 innerhalb des durch die drei Auflageflächen 7 des Loseteils 2 gebildeten Dreiecks angeordnet. Die Auflageflächen 7 sind an dem Loseteil 2 zumindest in der Fügerichtung z unbeweglich angeordnet. Die Orientierung der Auflageflächen 7 des Loseteils 2 stimmt mit der Orientierung der Auflageflächen 6 des Festteils 1 überein.

In der Verbindungsstellung liegen das Festteil 1 und das Loseteil 2 zumindest mit ihren jeweils drei Auflageflächen 6, 7 aneinander an. In mindestens einer Auflagefläche 6 des Festteils 1 und der korrespondierenden Auflagefläche 7 des Loseteils 2 mündet ein Kanal 12. Über den Kanal 12 wird ein gasförmiges Medium vom Loseteil 2 zum Festteil 1 geführt.

Es ist entsprechend der Darstellung in den FIG 1 und 2 möglich, dass in jeder Auflagefläche 6 des Festteils 1 ein jeweiliger Kanal 12 mündet. In analoger Weise ist es auch möglich, dass in jeder Auflagefläche 7 des Loseteils 2 ein jeweiliger Kanal 12 mündet. Dadurch können über die in der Verbindungsstellung aneinanderliegenden Auflageflächen 6, 7 des Festteils 1 und des Festteils 2 bis zu drei verschiedene gasförmige Medien geführt werden.

Es ist möglich, dass das Festteil 1 und das Loseteil 2 ausschließlich mit ihren jeweils drei Auflageflächen 6, 7 aneinander anliegen. In diesem Fall liegen das Festteil 1 und das Loseteil 2 in der Verbindungsstellung also nur mit ihren jeweiligen Auflageflächen 6, 7 aneinander an. Mit anderen Teilen - beispielsweise den Hauptpositionierhilfen 4, 5 - liegen das Festteil 1 und das Loseteil 2 in der Verbindungsstellung nicht aneinander an. Diese Teile sind zumindest in der Fügerichtung z gesehen voneinander beabstandet. Das Erreichen der Verbindungsstellung wird somit ausschließlich dadurch bestimmt, dass die Auflageflächen 7 des Loseteils 2 sich an die Auflageflächen 6 des Festteils 1 anlegen. Diese Lösung kann insbesondere dann realisiert werden, wenn über die Medienkupplung maximal drei verschiedene gasförmige Medien geführt werden müssen und keine elektrischen Signale geführt werden müssen.

Alternativ ist es möglich, dass über die Medienkupplung mehr als drei verschiedene gasförmige Medien geführt werden müssen oder sollen. In diesem Fall können beispielsweise zusätzlich Elemente 8, 9 (siehe FIG 7) zum Führen eines gasförmigen Mediums vorhanden sein. Die Elemente 8, 9 sind als Flächen ausgebildet, die in der Verbindungsstellung aneinander anliegen. Um das entsprechende gasförmige Medium führen zu können, müssen in der Verbindungsstellung auch die Elemente 8, 9 aneinander anliegen. Um dies zu gewährleisten und weiterhin auch zu gewährleisten, dass das Erreichen der Verbindungsstellung nach wie vor dadurch bestimmt ist, dass die Auflageflächen 7 des Loseteils 2 sich an die Auflageflächen 6 des Festteils 1 anlegen, sind die Elemente 8, 9 am Festteil 1 und/oder am Loseteil 2 zumindest in der Fügerichtung z nachgiebig angeordnet. In FIG 7 ist dies schematisch für das Element 9 am Loseteil 2 dargestellt. Es wäre jedoch alternativ oder zusätzlich ebenso möglich, das Element 8 des Festteils 1 in der Fügerichtung z nachgiebig anzuordnen.

Unabhängig von der Anzahl an gasförmigen Medien, die über die Medienkupplung geführt werden, ist es möglich, dass zusätzlich zu den gasförmigen Medien elektrische Signale geführt werden müssen oder sollen. In diesem Fall können beispielsweise Elemente 10, 11 (siehe FIG 7) zum Führen eines elektrischen Signals vorhanden sein. Von den Elementen 10, 11 ist in der Regel eines als Fläche ausgebildet, beispielsweise das Element 10 am Festteil 1. Das andere Element 11, 10 kann ebenfalls als Fläche ausgebildet sein. Es kann aber auch anders ausgebildet sein, beispielsweise als Druckfeder, als federnd gelagerter Kontaktstift und ähnliches mehr. Um das elektrische Signal übertragen zu können, müssen in der Verbindungsstellung auch die Elemente 10, 11 aneinander anliegen. Um dies zu gewährleisten und weiterhin auch zu gewährleisten, dass das Erreichen der Verbindungsstellung nach wie vor dadurch bestimmt ist, dass die Auflageflächen 7 des Loseteils 2 sich an die Auflageflächen 6 des Festteils 1 anlegen, sind die Elemente 10, 11 am Festteil 1 und/oder am Loseteil 2 zumindest in der Fügerichtung z nachgiebig angeordnet. In FIG 7 ist dies schematisch für das Element 11 am Loseteil 2 dargestellt. Es wäre jedoch alternativ oder zusätzlich ebenso möglich, das Element 10 des Festteils 1 in der Fügerichtung z nachgiebig anzuordnen.

Wenn die Elemente 8, 9, 10, 11 vorhanden sind, liegen das Festteil 1 und das Loseteil 2 in der Verbindungsstellung also zwar sowohl mit ihren jeweiligen Auflageflächen 6, 7 als auch mit den entsprechenden weiteren Elementen 8, 9, 10, 11 aneinander an. Mit anderen Teilen - beispielsweise den Hauptpositionierhilfen 4, 5 - liegen das Festteil 1 und das Loseteil 2 in der Verbindungsstellung aber auch in diesem Fall nicht aneinander an. Diese Teile sind zumindest in der Fügerichtung z gesehen weiterhin voneinander beabstandet. Aufgrund der nachgiebigen Anordnung der weiteren Elementen 8, 9, 10, 11 wird weiterhin auch in diesem Fall das Erreichen der Verbindungsstellung nicht durch die weiteren Elemente 8, 9, 10, 11 bestimmt, sondern nur ausschließlich durch die Auflageflächen 6, 7.

Die gasförmigen Medien, die über die Medienkupplung geführt werden sollen, sind in der Regel kostengünstige und ungefährliche Gase, insbesondere Druckluft, Stickstoff und eventuell Edelgase, insbesondere Argon. Weiterhin stehen die Gase in der Regel nur unter einem mäßigen Druck von maximal 15 bar. Eine hinreichende Abdichtung der Auflageflächen 6, 7 in der Verbindungsstellung kann daher auch ohne Dichtungselemente zwischen den Auflageflächen 6, 7 erreicht werden. Es kann jedoch von Vorteil sein, wenn die jeweils drei Auflageflächen 6, 7 poliert und/oder gehärtet sind. Wenn dies der Fall ist, können die jeweils drei Auflageflächen 6, 7 unmittelbar aneinander anliegen. Analoge Ausführungen gelten gegebenenfalls für Flächen, mit denen die Elemente 8, 9 in der Verbindungsstellung aneinander anliegen. Elektrische Signale - beispielsweise Versorgungsspannungen, analoge oder digitale Signale oder beispielsweise frequenzkodierte Signale, weisen in der Regel eine relativ niedrige Spannung von maximal 60 V auf, vorzugsweise von maximal 40 V.

Im Rahmen der vorliegenden Erfindung wird nicht näher erläutert, wie die Medien (Gase und gegebenenfalls auch elektrische Signale) der Medienkupplung zugeführt und von ihr abgeführt werden. Dies ist auf völlig konventionelle Weise möglich. Im Rahmen der vorliegenden Erfindung ist lediglich die Übertragung vom Loseteil 2 zum Festteil 1 und gegebenenfalls umgekehrt von Bedeutung.

Die Hauptpositionierhilfen 4, 5 sind - gemäß Ausführungsbeispiel aufgrund ihrer Ausgestaltung als Kegelschaft und Kegelhülse - bezüglich einer in Fügerichtung z verlaufenden Fügeachse 13 rotationssymmetrisch ausgebildet. Die Hauptpositionierhilfen 4, 5 allein können daher zwar die Zentrierung des Loseteils 2 relativ zum Festteil 1 gewährleisten. Um die Fügeachse 13 herum gesehen besteht jedoch, soweit es die Hauptpositionierhilfen 4, 5 betrifft, noch eine freie Verdrehbarkeit des Loseteils 2 relativ zum Festteil 1. Um auch die Orientierung des Loseteils 2 um die Fügeachse 13 herum zu gewährleisten, weisen das Festteil 1 und das Loseteil 2 daher an ihren einander zugewandten Seiten miteinander zusammenwirkende Zusatzpositionierhilfen 14, 15 auf. Durch die Zusatzpositionierhilfen 14, 15 wird das Loseteil 2 beim Überführen von der Trennstellung in die Verbindungsstellung um die Fügeachse 13 herum gesehen in einer vorbestimmten Drehstellung orientiert.

Die eine Zusatzpositionierhilfe 14 ist vorzugsweise als Kugel ausgebildet. Dies ist besonders gut in den FIG 1 und 2 erkennbar. Die Zusatzpositionierhilfe 14 ist vorzugsweise am Festteil 1 angeordnet. Die andere Zusatzpositionierhilfe 15 ist als sich verjüngende Kontur ausgebildet, die an ihrem schmalen Ende eine Vertiefung 16 zur Aufnahme der Zusatzpositionierhilfe 14 aufweist. Sowohl ein Durchmesser d der Kugel 14 als auch eine lichte Weite w der Vertiefung 16 bewegen sich in der Regel im zweistelligen Millimeterbereich. Die Vertiefung 16 weist jedoch vorzugsweise eine lichte Weite w auf, die nur geringfügig (oftmals nur bis zu 0,1 mm) größer als der Durchmesser d der Kugel 14 ist. Alternativ zur Ausgestaltung als Kugel könnte die Zusatzpositionierhilfe 14 auch als Zylinder ausgebildet sein. In diesem Fall verläuft die Zylinderachse orthogonal zur Fügeachse 13, insbesondere radial zur Fügeachse 13.

Die Ausbildung der Positionierhilfe 14 als Kugel und als Zylinder ist insbesondere deshalb von Vorteil, weil sich in der Praxis herausgestellt hat, dass durch diese Konturen ein Verkanten der Hauptpositionierhilfen 4, 5 bestmöglich ausgeschlossen wird. Das Überführen des Loseteils 2 von der Trennstellung in die Verbindungsstellung ist dadurch besonders zuverlässig möglich.

Die Hauptpositionierhilfen 4, 5 und die Zusatzpositionierhilfen 14, 15 sind vorzugsweise derart aufeinander abgestimmt, dass beim Überführen des Loseteils 2 von der Trennstellung in die Verbindungsstellung zuerst durch das Zusammenwirken der Hauptpositionierhilfen 4, 5 das Loseteil 2 relativ zum Festteil 1 teilweise oder vollständig quer zur Fügerichtung z translatorisch positioniert wird und erst danach durch das Zusammenwirken der Zusatzpositionierhilfen 14, 15 das Loseteil 2 in der vorbestimmten Drehstellung rotatorisch orientiert wird. Dies kann insbesondere durch eine entsprechende Anordnung der Hauptpositionierhilfen 4, 5 und der Zusatzpositionierhilfen 14, 15 ohne weiteres erreicht werden.

Um das Loseteil 2 in der Verbindungsstellung mit dem Festteil 1 verriegeln zu können, ist am Festteil 1 ein feststehendes Halteelement 17 angeordnet. Das feststehende Halteelement 17 kann beispielsweise als Zugkopf ausgebildet sein, der eine nutförmige Hinterschneidung 18 aufweist. Weiterhin ist am Loseteil 2 ein bewegliches Halteelement 19 angeordnet. Das bewegliche Halteelement 19 kann beispielsweise als Spannhülse 20 mit Greiffingern 21 ausgebildet sein. Weiterhin ist am Loseteil 2 ein Aktor 22 angeordnet, mittels dessen das bewegliche Halteelement 19 betätigt wird. Der Aktor 22 kann beispielsweise entsprechend der Darstellung in den FIG 3 bis 5 als Druckzylinder ausgebildet sein, insbesondere als pneumatisch betätigter Zylinder. Leitungen, über die der Aktor 22 elektrisch, hydraulisch oder pneumatisch angesteuert wird, sind in den FIG 3 bis 5 nicht mit dargestellt. Sie können in völlig konventioneller Weise ausgestaltet sein.

Zum Überführen des Loseteils 2 von der Trennstellung in die Verbindungsstellung muss zunächst der Aktor 22 derart angesteuert werden, dass er das bewegliche Halteelement 19 in einem geöffneten Zustand hält. Dies ist bei der Ausgestaltung gemäß den FIG 3 bis 5 der Fall, wenn der Kolben 23 des Druckzylinders 22 innerhalb des Loseteils 2 so weit wie möglich auf das Festteil 1 zu verfahren ist. Sodann wird mittels des Industrieroboters das Loseteil 2 in eine Zwischenstellung zwischen der Trennstellung und der Verbindungsstellung überführt. In der Zwischenstellung ist durch die Hauptpositionierhilfen 4, 5 bereits die Positionierung quer zur Fügerichtung z erfolgt und durch die Zusatzpositionierhilfen 14, 15 bereits eine definierte Drehstellung des Loseteils 2 relativ zum Festteil 1 gewährleistet. Die Kugel 14 (bzw. gegebenenfalls der Zylinder) befindet sich mit ihrer größten Erstreckung in der xy-Ebene jedoch noch nicht oder zumindest noch nicht vollständig in der Vertiefung 16. Ausgehend von diesem Zustand wird der Aktor 22 derart angesteuert, dass er das bewegliche Halteelement 19 in einem geschlossenen Zustand überführt. Dies ist bei der Ausgestaltung gemäß den FIG 3 bis 5 der Fall, wenn der Kolben 23 des Druckzylinders 22 innerhalb des Loseteils 2 so weit wie möglich vom Festteil 1 weg verfahren ist. Durch das Überführen des beweglichen Halteelements 19 in den geschlossenen Zustand wird das Loseteil 2 von der Zwischenstellung in die Verbindungsstellung überführt. Weiterhin wird durch diese Bewegung die Zusatzpositionierhilfe 14 in die Vertiefung 16 eingeführt. In diesem Zustand - d.h. dann, wenn sich das Loseteil 2 bereits in der Verbindungsstellung befindet und das bewegliche Halteelement 19 im geschlossenen Zustand befindet - wird das Loseteil 2 am Festteil 1 verriegelt gehalten. Ein Lösen des Loseteils 2 ist nicht möglich, bis das bewegliche Halteelement 19 wieder in den geöffneten Zustand überführt wird.

Zum Überführen des Loseteils 2 von der Verbindungsstellung in die Trennstellung wird der Aktor 22 derart angesteuert, dass er das bewegliche Halteelement 19 in den geöffneten Zustand überführt. Sodann wird mittels des Industrieroboters das Loseteil 2 von der Verbindungsstellung in die Trennstellung überführt.

Es sind Ausgestaltungen möglich, bei denen ein Überführen des beweglichen Halteelements 19 vom geöffneten in den geschlossenen Zustand und umgekehrt ausschließlich durch Ansteuern des Aktors 22 möglich ist. Es kann jedoch geschehen, dass die Energieversorgung des Aktors 22 ausfällt. Um in einem derartigen Fall - wenn also der Aktor 22 kraftlos wird - dennoch das Loseteil 2 vom Festteil 1 lösen zu können, ist der Aktor 22 vorzugsweise derart ausgebildet, dass im kraftlosen Zustand des Aktors 22 das bewegliche Halteelement 19 durch äußere Krafteinwirkung auf das Loseteil 2 vom geschlossenen in den geöffneten Zustand überführbar ist. Beispielsweise kann im Falle der Ausgestaltung gemäß den FIG 3 bis 5 durch Ziehen am Loseteil 2 das Loseteil 2 entgegen der Fügerichtung z vom Festteil 1 gelöst werden, wobei die Position des Aktors 22 relativ zum Festteil 1 zunächst erhalten bleibt und somit beispielsweise der Kolben 23 innerhalb des Loseteils 2 verfahren wird. Dadurch wird das bewegliche Halteelement 19 in seine Öffnungsstellung überführt, so dass danach das Loseteil 2 vom Festteil 1 entfernt werden kann.

Um in einem derartigen Fall das Entfernen des Loseteils 2 vom Festteil 1 nicht zu behindern, ist es von erheblichem Vorteil, dass die Hauptpositionierhilfen 4, 5 und gegebenenfalls auch die Zusatzpositionierhilfen 14, 15 derart ausgebildet sind, dass sie nicht selbsthemmend wirken, d.h dass sie das Loseteil 2 nicht am Festteil 1 halten, wenn eine äußere Kraft auf das Loseteil 2 ausgeübt wird, die vom Festteil 1 weg gerichtet ist. Dies soll auch bei einem Verkanten oder dergleichen gelten. Dies ist durch die obenstehend erläuterten konkreten Ausgestaltungen (Hauptpositionierhilfen 4, 5 als Kegelschaft und Kegelhülse ausgebildet und Zusatzpositionierhilfen 14, 15 als Kugel oder Zylinder und sich verjüngende Kontur ausgebildet) gewährleistet. Es sind aber auch andere geeignete Ausgestaltungen möglich.

In vielen Fällen verläuft die Fügerichtung z exakt oder zumindest im Wesentlichen waagrecht. In diesem Fall kann beispielsweise innerhalb der zur z-Richtung orthogonalen xy-Ebene die x-Richtung mit der Vertikalen korrespondieren und die y-Richtung waagrecht verlaufen. Um bei einem im Wesentlichen waagrechten Verlauf der Fügerichtung z im kraftlosen Zustand des Aktors 22 ein Abfallen des Loseteils 2 vom Festteil 1 zu verhindern, können (siehe beispielsweise FIG 1 und 2) beidseitig der Hauptpositionierhilfe 4 am Festteil 1 Rückhalteelemente 24 angeordnet sein. Die Rückhalteelemente 24 am Festteil 1 können beispielsweise als Haltedorne ausgebildet sein. Am Loseteil 2 sind in diesem Fall korrespondierende Rückhalteelemente 25 angeordnet, beispielsweise entsprechende Aufnahmeringe.

Die vorliegende Erfindung weist viele Vorteile auf. Insbesondere wird durch die erfindungsgemäße Ausgestaltung gewährleistet, dass die Bewegung des Loseteils 2 beim Überführen von der Trennstellung in die Verbindungsstellung nicht mehr exakt in der Fügerichtung z erfolgen muss. Kleinere, in der Praxis oftmals nicht vermeidbare Winkelabweichungen von bis zu 3°, mindestens aber bis zu 2°, sind ohne weiteres tolerierbar. Dennoch kann ein zuverlässiges Überführen in die Verbindungsstellung erfolgen. Ein analoger Sachverhalt ergibt sich für das Überführen des Loseteils 2 von der Verbindungsstellung in die Trennstellung. Ebenso ist auch die anfängliche Positionierung quer zur Fügerichtung z durch den Industrieroboter unkritisch. Eine anfängliche Positioniergenauigkeit auf ca. 10 mm genau ist völlig ausreichend. Auch hohe Temperaturunterschiede von bis zu 200 °C zwischen dem Festteil 1 und dem Loseteil 2 beim Verbinden sind unkritisch.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Festteil
- 2: Loseteil
- 3: Endstück
- 4: Hauptpositionierhilfe/Kegelschaft
- 5: Hauptpositionierhilfe/Kegelhülse
- 6, 7: Auflageflächen
- 8, 9: Elemente zum Führen eines gasförmigen Mediums
- 10, 11: Elemente zum Führen eines elektrischen Signals
- 12: Kanäle
- 13: Fügeachse
- 14, 15: Zusatzpositionierhilfen
- 16: Vertiefung
- 17: feststehendes Halteelement
- 18: nutförmige Hinterschneidung
- 19: bewegliches Halteelement
- 20: Spannhülse
- 21: Greiffinger
- 22: Aktor
- 23: Kolben
- 24, 25: Rückhalteelemente

- d: Durchmesser
- w: lichte Weite
- x: Vertikale
- y: Horizontale
- z: Fügerichtung

- α, β: Öffnungswinkel

## Patentansprüche

1. Medienkupplung,
- wobei die Medienkupplung ein Festteil (1) und ein Loseteil (2) aufweist,
- wobei das Loseteil (2) durch Bewegen in einer Fügerichtung (z) auf das Festteil (1) zu von einer Trennstellung in eine Verbindungsstellung gebracht werden kann und durch Bewegen entgegen der Fügerichtung (z) vom Festteil (1) weg von der Verbindungsstellung in die Trennstellung gebracht werden kann,
- wobei das Loseteil (2) in der Trennstellung vom Festteil (1) getrennt ist und in der Verbindungsstellung mit dem Festteil (1) verbunden ist,
- wobei das Festteil (1) und das Loseteil (2) an ihren in der Verbindungsstellung einander zugewandten Seiten miteinander zusammenwirkende Hauptpositionierhilfen (4, 5) aufweisen, durch welche das Loseteil (2) beim Überführen von der Trennstellung in die Verbindungsstellung quer zur Fügerichtung (z) gesehen relativ zum Festteil (1) positioniert wird,
- wobei das Festteil (1) und das Loseteil (2) jeweils eine Anzahl an Auflageflächen (6, 7) aufweisen,
- wobei die Auflageflächen (6, 7) an dem Festteil (1) und dem Loseteil (2) zumindest in der Fügerichtung (z) und vorzugsweise auch quer dazu unbeweglich angeordnet sind,
- wobei in mindestens einer Auflagefläche (6) des Festteils (1) und der korrespondierenden Auflagefläche (7) des Loseteils (2) jeweils ein Kanal (12) zum Führen eines gasförmigen Mediums mündet,
**dadurch gekennzeichnet,**
- **dass** die Anzahl an Auflageflächen (6, 7) des Festteils (1) und des Loseteils (2) jeweils genau drei beträgt,
- **dass** die Auflageflächen (6, 7) des Festteils (1) und des Loseteils (2) jeweils ein Dreieck bilden und
- **dass** entweder das Festteil (1) und das Loseteil (2) in der Verbindungsstellung ausschließlich mit ihren jeweils drei Auflageflächen (6, 7) aneinander anliegen oder das Festteil (1) und das Loseteil (2) in der Verbindungsstellung zwar zusätzlich zu ihren jeweils drei Auflageflächen (6, 7) auch mit einer Anzahl von weiteren Elementen (8 bis 11) aneinander anliegen, die weiteren Elemente (8 bis 11) aber am Festteil (1) und/oder am Loseteil (2) zumindest in der Fügerichtung (z) nachgiebig angeordnet sind.

2. Medienkupplung nach Anspruch 1,
**dadurch gekennzeichnet,**
**dass** die jeweiligen Hauptpositionierhilfen (4, 5) quer zur Fügerichtung (z) gesehen innerhalb des durch die jeweils genau drei Auflageflächen (6, 7) von Festteil (1) und Loseteil (2) gebildeten Dreiecks angeordnet sind.

3. Medienkupplung nach Anspruch 1 oder 2,
**dadurch gekennzeichnet,**
**dass** die Hauptpositionierhilfen (4, 5) derart ausgebildet sind, dass sie eine Bewegung des Loseteils (2) in einer Ebene orthogonal zur Fügerichtung (z) in umso größerem Ausmaß zulassen, je weiter das Loseteil (2) in Fügerichtung (z) gesehen vom Festteil (1) entfernt ist.

4. Medienkupplung nach Anspruch 3,
**dadurch gekennzeichnet,**
**dass** das Festteil (1) und das Loseteil (2) jeweils genau eine Hauptpositionierhilfe (4, 5) aufweisen und dass je eine der Hauptpositionierhilfen (4, 5) als Kegelschaft (4) und als Kegelhülse (5) ausgebildet ist.

5. Medienkupplung nach einem der obigen Ansprüche,
**dadurch gekennzeichnet,**
**dass** die Hauptpositionierhilfen (4, 5) derart ausgebildet sind, dass sie nicht selbsthemmend wirken.

6. Medienkupplung nach einem der obigen Ansprüche,
**dadurch gekennzeichnet,**
**dass** die Hauptpositionierhilfen (4, 5) bezüglich einer in Fügerichtung (z) verlaufenden Fügeachse (13) rotationssymmetrisch ausgebildet sind und dass das Festteil (1) und das Loseteil (2) weiterhin an ihren einander zugewandten Seiten miteinander zusammenwirkende Zusatzpositionierhilfen (14, 15) aufweisen, durch welche das Loseteil (2) beim Überführen von der Trennstellung in die Verbindungsstellung um die Fügeachse (13) herum gesehen in einer vorbestimmten Drehstellung orientiert wird.

7. Medienkupplung nach Anspruch 6,
**dadurch gekennzeichnet,**
**dass** eine (14) der Zusatzpositionierhilfen (14, 15) als Kugel (14) oder als Zylinder ausgebildet ist, wobei im Falle eines Zylinders die Zylinderachse orthogonal zur Fügeachse (13) verläuft, insbesondere radial zur Fügeachse (13), und dass die andere (15) der Zusatzpositionierhilfen (14, 15) als sich verjüngende Kontur ausgebildet ist, die an ihrem schmalen Ende eine Vertiefung (16) zur Aufnahme der einen Zusatzpositionierhilfe (14) aufweist.

8. Medienkupplung nach Anspruch 6 oder 7,
**dadurch gekennzeichnet,**
**dass** die Hauptpositionierhilfen (4, 5) und die Zusatzpositionierhilfen (14, 15) derart aufeinander abgestimmt sind, dass beim Überführen des Loseteils (2) von der Trennstellung in die Verbindungsstellung zuerst durch das Zusammenwirken der Hauptpositionierhilfen (4, 5) das Loseteil (2) relativ zum Festteil (1) teilweise oder vollständig quer zur Fügerichtung (z) translatorisch positioniert wird und erst danach durch das Zusammenwirken der Zusatzpositionierhilfen (14, 15) das Loseteil (2) in der vorbestimmten Drehstellung rotatorisch orientiert wird.

9. Medienkupplung nach einem der obigen Ansprüche,
**dadurch gekennzeichnet,**
**dass** die jeweils drei Auflageflächen (6, 7) poliert und/oder gehärtet sind und in der Verbindungsstellung ohne Dichtungselemente zwischen ihnen unmittelbar aneinander anliegen.

10. Medienkupplung nach einem der obigen Ansprüche,
**dadurch gekennzeichnet,**
**dass** die jeweils drei Auflageflächen (6, 7) in der Verbindungsstellung orthogonal zur Fügerichtung (z) orientiert sind.

11. Medienkupplung nach einem der obigen Ansprüche,
**dadurch gekennzeichnet,**
- **dass** am Festteil (2) ein feststehendes Halteelement (17) angeordnet ist und am Loseteil (2) ein bewegliches Halteelement (19) angeordnet ist,
- **dass** das bewegliche Halteelement (19) mittels eines Aktors (22) von einem geöffneten Zustand in einen geschlossenen Zustand und vom geschlossenen Zustand in den geöffneten Zustand überführbar ist,
- **dass** im geöffneten Zustand des beweglichen Halteelements (19) ein Überführen des Loseteils (2) von der Trennstellung in die Verbindungsstellung und umgekehrt möglich ist,
- **dass** im geschlossenen Zustand des beweglichen Halteelements (19) ein Überführen des Loseteils (2) von der Trennstellung in die Verbindungsstellung und umgekehrt nicht möglich ist und
- **dass** der Aktor (22) derart ausgebildet ist, dass im kraftlosen Zustand des Aktors (22) das bewegliche Halteelement (19) durch äußere Krafteinwirkung auf das Loseteil (2) vom geschlossenen in den geöffneten Zustand überführbar ist.

12. Medienkupplung nach einem der obigen Ansprüche,
**dadurch gekennzeichnet,**
**dass** die Fügerichtung (z) im Wesentlichen waagrecht verläuft und dass beidseitig der Hauptpositionierhilfen (4, 5) sich in Fügerichtung (z) erstreckende Rückhalteelemente (24, 25) angeordnet sind, die im kraftlosen Zustand des Aktors (22) ein Abfallen des Loseteils (2) vom Festteil (1) verhindern.

13. Medienkupplung nach einem der obigen Ansprüche,
**dadurch gekennzeichnet,**
**dass** über die weiteren Elemente (8 bis 11) am Festteil (1) und am Loseteil (2), die in der Verbindungsstellung aneinander anliegen, gasförmige Medien und/oder elektrische Signale zwischen dem Festteil (1) und dem Loseteil (2) übertragen werden.

## Claims

1. Media coupling,
- wherein the media coupling has a fixed part (1) and a loose part (2),
- wherein the loose part (2) can be moved from a disconnection position to a connection position by moving towards the fixed part (1) in a joining direction (z) and can be moved from the connection position to the disconnection position by moving away from the fixed part (1) counter to the joining direction (z),
- wherein the loose part (2) is disconnected from the fixed part (1) in the disconnection position and is connected to the fixed part (1) in the connection position,
- wherein the fixed part (1) and the loose part (2) have, at their sides which face one another in the connection position, main positioning aids (4, 5) which interact with one another and by way of which the loose part (2) is positioned relative to the fixed part (1) as it moves from the disconnection position to the connection position as viewed transversely in relation to the joining direction (z),
- wherein the fixed part (1) and the loose part (2) each have a number of support surfaces (6, 7),
- wherein the support surfaces (6, 7) on the fixed part (1) and the loose part (2) are arranged in an immovable manner at least in the joining direction (z) and preferably also transversely to the said joining direction,
- wherein in each case one duct (12) for guiding a gaseous medium opens out in at least one support surface (6) of the fixed part (1) and the corresponding support surface (7) of the loose part (2),
**characterized**
- **in that** the number of support surfaces (6, 7) of the fixed part (1) and of the loose part (2) is precisely three in each case,
- **in that** the support surfaces (6, 7) of the fixed part (1) and of the loose part (2) each form a triangle, and
- **in that** either the fixed part (1) and the loose part (2) bear against one another solely by way of their in each case three support surfaces (6, 7) in the connection position or the fixed part (1) and the loose part (2) bear against one another, in addition to their in each case three support surfaces (6, 7), also by way of a number of further elements (8 to 11) in the connection position, but the further elements (8 to 11) are arranged in a yielding manner at least in the joining direction (z) on the fixed part (1) and/or on the loose part (2).

2. Media coupling according to Claim 1,
**characterized**
**in that** the respective main positioning aids (4, 5) are arranged within the triangle which is formed by the in each case precisely three support surfaces (6, 7) of the fixed part (1) and of the loose part (2) as viewed transversely in relation to the joining direction (z).

3. Media coupling according to Claim 1 or 2,
**characterized**
**in that** the main positioning aids (4, 5) are formed in such a way that they permit a movement of the loose part (2) in a plane orthogonal in relation to the joining direction (z) to a greater extent the further away the loose part (2) is from the fixed part (1) as viewed in the joining direction (z).

4. Media coupling according to Claim 3,
**characterized**
**in that** the fixed part (1) and the loose part (2) each have precisely one main positioning aid (4, 5), and in that one of the main positioning aids (4, 5) is designed as a conical shaft (4) and one is designed as a conical sleeve (5).

5. Media coupling according to one of the preceding claims, **characterized**
**in that** the main positioning aids (4, 5) are designed in such a way that they do not have a self-locking action.

6. Media coupling according to one of the preceding claims, **characterized**
**in that** the main positioning aids (4, 5) are of rotationally symmetrical design with respect to a joining axis (13) which runs in the joining direction (z), and in that the fixed part (1) and the loose part (2) further have, on their sides which face one another, additional positioning aids (14, 15) which interact with one another and by way of which the loose part (2) is oriented in a predetermined rotation position as it moves from the disconnection position to the connection position as viewed around the joining axis (13).

7. Media coupling according to Claim 6,
**characterized**
**in that** one (14) of the additional positioning aids (14, 15) is designed as a ball (14) or as a cylinder, wherein, in the case of a cylinder, the cylinder axis runs orthogonally in relation to the joining axis (13), in particular radially in relation to the joining axis (13), and in that the other (15) of the additional positioning aids (14, 15) is designed as a tapering contour which has, at its narrow end, a recess (16) for receiving the one additional positioning aid (14).

8. Media coupling according to Claim 6 or 7,
**characterized**
**in that** the main positioning aids (4, 5) and the additional positioning aids (14, 15) are matched to one another in such a way that, as the loose part (2) moves from the disconnection position to the connection position, the loose part (2) is first positioned in a translatory manner relative to the fixed part (1) partially or completely transversely in relation to the joining direction (z) owing to the interaction of the main positioning aids (4, 5), and the loose part (2) is only then oriented in a rotational manner in the predetermined rotation position owing to the interaction of the additional positioning aids (14, 15).

9. Media coupling according to one of the preceding claims, **characterized**
**in that** the in each case three support surfaces (6, 7) are polished and/or hardened and bear directly against one another in the connection position without sealing elements between them.

10. Media coupling according to one of the preceding claims, **characterized**
**in that** the in each case three support surfaces (6, 7) are oriented orthogonally in relation to the joining direction (z) in the connection position.

11. Media coupling according to one of the preceding claims, **characterized**
- **in that** a stationary holding element (17) is arranged on the fixed part (2) and a movable holding element (19) is arranged on the loose part (2),
- **in that** the movable holding element (19) can be moved from an opened state to a closed state and from the closed state to the opened state by means of an actuator (22),
- **in that** the loose part (2) can move from the disconnection position to the connection position, and vice versa, in the opened state of the movable holding element (19),
- **in that** the loose part (2) cannot move from the disconnection position to the connection position, and vice versa, in the closed state of the movable holding element (19), and
- **in that** the actuator (22) is designed in such a way that the movable holding element (19) can be moved from the closed to the opened state by external action of force onto the loose part (2) in the force-free state of the actuator (22).

12. Media coupling according to one of the preceding claims, **characterized**
**in that** the joining direction (z) runs substantially horizontally, and in that retaining elements (24, 25) which extend in the joining direction (z) and prevent the loose element (2) falling off the fixed part (1) in the force-free state of the actuator (22) are arranged on either side of the main positioning aids (4, 5).

13. Media coupling according to one of the preceding claims, **characterized**
**in that** gaseous media and/or electrical signals can be transmitted between the fixed part (1) and the loose part (2) via the further elements (8 to 11) on the fixed part (1) and on the loose part (2) which bear against one another in the connection position.

## Revendications

1. Accouplement fluidique,
- l'accouplement fluidique comprenant une partie fixe (1) et une partie mobile (2),
- la partie mobile (2) pouvant être amenée d'une position de séparation dans une position de liaison par déplacement dans une direction de jonction (z) la rapprochant de la partie fixe (1), et pouvant être amenée de la position de liaison dans la position de séparation par déplacement dans le sens opposé à la direction de jonction (z) l'éloignant de la partie fixe (1),
- la partie mobile (2) étant séparée de la partie fixe (1) dans la position de séparation et étant reliée à la partie fixe (1) dans la position de liaison,
- la partie fixe (1) et la partie mobile (2) comprenant, sur leurs faces qui sont tournées l'une vers l'autre dans la position de liaison, des éléments d'aide au positionnement principaux (4, 5) coopérant l'un avec l'autre grâce auxquels la partie mobile (2) est positionnée par rapport à la partie fixe (1) dans le sens transversal à la direction de jonction (z) lors du passage de la position de séparation dans la position de liaison,
- la partie fixe (1) et la partie mobile (2) comprenant chacune un nombre de surfaces d'appui (6, 7),
- les surfaces d'appui (6, 7) étant disposées de manière fixe sur la partie fixe (1) et sur la partie mobile (2) au moins dans la direction de jonction (z) et de préférence également transversalement à celle-ci,
- un canal (12) destiné à guider un fluide gazeux débouchant à chaque fois dans au moins une surface d'appui (6) de la partie fixe (1) et la surface d'appui (7) correspondante de la partie mobile (2),
**caractérisé**
- **en ce que** le nombre de surfaces d'appui (6, 7) de la partie fixe (1) et de la partie mobile (2) est à chaque fois exactement de trois,
- **en ce que** les surfaces d'appui (6, 7) de la partie fixe (1) et de la partie mobile (2) forment à chaque fois un triangle, et
- **en ce que** soit la partie fixe (1) et la partie mobile (2) s'appuient l'une contre l'autre, dans la position de liaison, uniquement par leurs trois surfaces d'appui (6, 7) respectives, soit la partie fixe (1) et la partie mobile (2) s'appuient l'une contre l'autre, dans la position de liaison, avec aussi, en plus de leurs trois surfaces d'appui (6, 7) respectives, un nombre d'éléments supplémentaires (8 à 11), lesquels éléments supplémentaires (8 à 11) sont toutefois disposés sur la partie fixe (1) et/ou sur la partie mobile (2) de manière flexible au moins dans la direction de jonction (z).

2. Accouplement fluidique selon la revendication 1,
**caractérisé**
**en ce que** les éléments d'aide au positionnement principaux (4, 5) respectifs sont disposés, dans le sens transversal par rapport à la direction de jonction (z), à l'intérieur du triangle formé par les à chaque fois exactement trois surfaces d'appui (6, 7) de la partie fixe (1) et de la partie mobile (2).

3. Accouplement fluidique selon la revendication 1 ou 2, **caractérisé**
**en ce que** les éléments d'aide au positionnement principaux (4, 5) sont réalisés de façon à permettre un mouvement de la partie mobile (2) dans un plan orthogonal à la direction de jonction (z) d'une ampleur d'autant plus grande que la partie mobile (2) est éloignée de la partie fixe (1), en vue dans la direction de jonction (z).

4. Accouplement fluidique selon la revendication 3,
**caractérisé**
**en ce que** la partie fixe (1) et la partie mobile (2) comprennent chacune exactement un élément d'aide au positionnement principal (4, 5) et en ce que l'un des éléments d'aide au positionnement principaux (4, 5) est réalisé en tant que tige conique (4) et l'autre en tant que douille conique (5).

5. Accouplement fluidique selon l'une des revendications précédentes,
**caractérisé**
**en ce que** les éléments d'aide au positionnement principaux (4, 5) sont réalisés de façon à ne pas avoir une action autobloquante.

6. Accouplement fluidique selon l'une des revendications précédentes,
**caractérisé**
**en ce que** les éléments d'aide au positionnement principaux (4, 5) sont réalisés avec une symétrie de révolution par rapport à un axe de jonction (13) s'étendant dans la direction de jonction (z) et en ce que la partie fixe (1) et la partie mobile (2) sont en outre pourvues, sur leurs faces tournées l'une vers l'autre, d'éléments d'aide au positionnement additionnels (14, 15) coopérant l'un avec l'autre grâce auxquels la partie mobile (2) est orientée dans une position de rotation prédéterminée autour de l'axe de jonction (13) lors du passage de la position de séparation dans la position de liaison.

7. Accouplement fluidique selon la revendication 6,
**caractérisé**
**en ce qu'**un (14) des éléments d'aide au positionnement additionnels (14, 15) est réalisé en tant que sphère (14) ou en tant que cylindre, l'axe du cylindre, dans le cas d'un cylindre, s'étendant de manière orthogonale à l'axe de jonction (13), notamment de manière radiale par rapport à l'axe de jonction (13), et en ce que l'autre (15) des éléments d'aide au positionnement additionnels (14, 15) est réalisé en tant que contour qui va en rétrécissant et présente au niveau de son extrémité resserrée un creux (16) destiné à recevoir l'élément d'aide au positionnement additionnel (14).

8. Accouplement fluidique selon la revendication 6 ou 7, **caractérisé**
**en ce que** les éléments d'aide au positionnement principaux (4, 5) et les éléments d'aide au positionnement additionnels (14, 15) sont ajustés les uns par rapport aux autres de sorte que, lors du passage de la partie mobile (2) de la position de séparation dans la position de liaison, la partie mobile (2) soit d'abord positionnée par rapport à la partie fixe (1), partiellement ou totalement, par translation transversalement à la direction de jonction (z) et, ensuite seulement, la partie mobile (2) soit orientée par rotation dans la position de rotation prédéterminée grâce à la coopération des éléments d'aide au positionnement additionnels (14, 15).

9. Accouplement fluidique selon l'une des revendications précédentes,
**caractérisé**
**en ce que** les à chaque fois trois surfaces d'appui (6, 7) sont polies et/ou durcies et sont en contact direct l'une avec l'autre sans éléments d'étanchéité entre elles dans la position de liaison.

10. Accouplement fluidique selon l'une des revendications précédentes,
**caractérisé**
**en ce que** les à chaque fois trois surfaces d'appui (6, 7) sont orientées de manière orthogonale à la direction de jonction (z) dans la position de liaison.

11. Accouplement fluidique selon l'une des revendications précédentes,
**caractérisé**
- **en ce qu'**un élément de maintien fixe (17) est situé sur la partie fixe (2) et un élément de maintien mobile (19) est situé sur la partie mobile (2),
- **en ce que** l'élément de maintien mobile (19) peut, grâce à un actionneur (22), passer d'un état ouvert dans un état fermé et de l'état fermé dans l'état ouvert,
- **en ce que**, dans l'état ouvert de l'élément de maintien mobile (19), un passage de la partie mobile (2) de la position de séparation dans la position de liaison, et inversement, est possible,
- **en ce que**, dans l'état fermé de l'élément de maintien mobile (19), un passage de la partie mobile (2) de la position de séparation dans la position de liaison, et inversement, n'est pas possible, et
- **en ce que** l'actionneur (22) est réalisé de sorte que, lorsque l'actionneur (22) n'exerce aucune force, l'élément de maintien mobile (19) puisse passer de l'état fermé dans l'état ouvert grâce à l'action d'une force extérieure sur la partie mobile (2).

12. Accouplement fluidique selon l'une des revendications précédentes,
**caractérisé**
**en ce que** la direction de jonction (z) est essentiellement horizontale et en ce que des éléments de retenue (24, 25) s'étendant dans la direction de jonction (z) sont disposés des deux côtés des éléments d'aide au positionnement principaux (4, 5), lesquels éléments de retenue empêchent que la partie mobile (2) se détache de la partie fixe (1) lorsque l'actionneur (22) n'exerce aucune force.

13. Accouplement fluidique selon l'une des revendications précédentes,
**caractérisé**
**en ce que** des fluides gazeux et/ou des signaux électriques sont transmis entre la partie fixe (1) et la partie mobile (2) par le biais des éléments supplémentaires (8 à 11) présents sur la partie fixe (1) et sur la partie mobile (2) qui sont en appui les uns contre les autres dans la position de liaison.
